# EUROPÄISCHE PATENTSCHRIFT

(11) **EP 1 078 179 B1**
(45) Veröffentlichungstag und Bekanntmachung des Hinweises auf die Patenterteilung: **21.11.2001**
(21) Anmeldenummer: 99934476.5
(22) Anmeldetag: 11.05.1999
(51) Int. Cl.: F16H 7/02, F16H 57/00, F16H 55/17

(54) **ZAHNGURTGETRIEBE**
TOOTH BELT DRIVE MECHANISM
ENTRAINEMENT A COURROIE DENTEE

(30) Priorität: 12.05.1998 DE 29808567 U
(43) Veröffentlichungstag der Anmeldung: 28.02.2001
(73) Patentinhaber: Hörmann KG Antriebstechnik, 33790 Halle i. Westfalen (DE)
(72) Erfinder: HÖRMANN, Thomas, J., D-66606 St. Wendel (DE)
(74) Vertreter: Kastel, Stefan Dipl.-Phys.
(86) Internationale Anmeldenummer: DE9901424
(87) Internationale Veröffentlichungsnummer: WO9958879

(56) Entgegenhaltungen:
- EP-A- 0 405 667
- GB-A- 2 064 061
- US-A- 3 173 301

## Beschreibung

Die Erfindung betrifft ein Gurtgetriebe oder einen Gurtantrieb mit einem Führungs- oder An- bzw. Abtriebsrad, nach dem Oberbegriff des beigefügten Anspruchs 1, wie er aus der EP 0 405 667 A1 bekannt ist.

Bei diesem bekannten Gurtgetriebe oder Gurtantrieb weisen dessen beide Räder Zähne zum Erfassen eines wie eine Antriebskette mit Löchern zur Aufnahme der Radzähne ausgebildeten Metallgurts auf. Gemäß EP 0 405 667 A1 werden formschlüssige Antriebe wie Zahngurtantriebe als nachteilig angesehen, da sie Spiel, eine vergleichsweise geringe Steifheit und einen ungleichmäßigen Lauf aufweisen sollen. Vorteilhaft wird dagegen das bei solchen formschlüssigen Getrieben unzweideutig angebbare Übersetzungsverhältnis angesehen. Bei reib- oder kraftschlüssigen Getrieben wie Stahlgurtgetrieben wird in dieser Druckschrift die hohe Steifheit und der gleichmäßige Lauf als vorteilhaft, das nicht genau angebbare Übersetzungsverhältnis dagegen als nachteilhaft angesehen. Um ein Getriebe zu schaffen, dass die Vorteile von form- und kraftschlüssigen Getrieben vereint, deren Nachteile aber nicht aufweist wird durch die EP 0 405 667 A1 ein Getriebe mit zwei Führungs-, An- oder Abtriebsrädem der eingangs genannten Art vorgeschlagen, wobei jedes Rad in Segmente unterteilt ist, die gegen Federkraft in der tangentialen Richtung des Rades verlagerbar ist, und wobei jedes Segment mit einer Lauffläche versehen ist, die einen radial gerichteten Vorsprung hat, während der Gurt Ausnehmungen hat, durch welche bei Betrieb des Getriebesystems die Vorsprünge in Erfassung mit dem Gurt sind, der Kraft hauptsächlich durch Reibung mit den Laufflächen von einem Rad auf das andere überträgt.

Die vorliegende Erfindung bezieht sich aber dahingegen auf ein Zahngurtgetriebe oder einen Zahngurtantrieb mit einem Führungs- oder An- bzw. Abtriebsrad, das mit über dem Radumfang verteilten Erfassungsbereichen zum formschlüssigen Erfassen von Zähnen des Zahngurtes versehen ist, und mehr insbesondere auf einen einen Zahngurt verwendenden Garagentorantrieb.

Zahnriementriebe oder Zahnriemengetriebe und -antriebe sowie Zahngurttriebe oder Zahngurtgetriebe und -antriebe sind bekannt. Sie dienen zum formschlüssigen Übertragen von Kraft und Bewegung. Die bei Zahnriemengetriebe verwendeten Zahnriemen unterschieden sich von den bei Zahngurtgetrieben verwendeten Zahngurten durch ihren elastischen Materialaufbau der Zähne. Zahnriemen sind somit in der Lage Material- oder Fertigungs- bzw. Teilungstoleranzen in gewisser Weise auszugleichen, was zu einem relativ ruhigen Lauf des Zahnriemens über Rollen, Räder oder Scheiben, die zur Führung oder zum An- oder Abtrieb vorgesehen sind, führt. Der Materialaufbau der Zahnriemen bedingt aber auch Nachteile in der Fertigung, der Materialermüdung und der damit verbundenen begrenzten Lebensdauer sowie der begrenzten Zugkraft. Zahngurtantriebe haben sich daher für bestimmte Anwendungsgebiete wie zum Beispiel bei Garagentorantrieben als besser geeignet herausgestellt. Die Zahngurte bestehen im wesentlichen aus einem sich auch unter Belastung kaum ausdehnenden Gurt - beispielsweise auf der Grundlage eines Textilmaterials, insbesondere mit Kunststoffasem, das durch Metalleinziehungen oder dergleichen verstärkt ist - und an den Gurt in bestimmten Abstand angebrachten Zähnen, zum Beispiel angespritzten Kunststoffzähnen. Die Zahngurte sind demgemäß sehr zugbelastbar und im wesentlichen wartungsfrei. Jedoch ergeben sich im Vergleich zu Zahnriemen höhere Ablaufgeräusche an den in solchen Antrieben üblichen Umlenk- oder Antriebsrollen bzw. -rädern. Diese Ablaufgeräusche sind um so höher, je größer die Toleranzen bei den Zahnabständen bemessen sind.

Der Erfindung liegt die Aufgabe zugrunde, die Laufgeräusche während des Betriebes eines Gurtgetriebes- oder -antriebes zu vermindern.

Diese Aufgabe wird durch ein Gurtgetriebe oder einen Gurtantrieb mit den Merkmalen des beigefügten Anspruchs 1 gelöst. Vorteilhafte Ausgestaltungen der Erfindung sind in den Unteransprüchen angegeben.

Das Führungs-, An- oder Abtriebsrad des erfindungsgemäßen Gurtgetriebes bzw. Antriebes hat also Durchbrechungen oder Einschnitte am äußeren Umfangsbereich zum Ermöglichen einer elastischen Relativbewegung in Umfangsrichtung zwischen Erfassungsbereichen oder Teilbereichen derselben.

Aufgrund dieser Einschnitte ist, auch wenn gleiche Materialien wie bisher bei Zahngurtantrieben üblich verwendet werden, das Rad des erfindungsgemäßen Gurtgetriebes oder -antriebes an seinem Umfangsbereich gegenüber bekannten bei Zahngurtantrieben verwendeten Rädem flexibel ausgelegt. Die die einzelnen Zähne des Zahngurtes erfassenden Erfassungsbereiche sind in gewissem, wenn möglicherweise auch nur geringem Maße zumindest in Umfangsrichtung elastisch. Die Erfassungsbereiche des erfindungsgemäßen Rades sind durch die Einschnitte in flexibler Form gehalten. Dadurch ergibt sich ein mögliches elastisches Spiel zwischen den einzelnen Erfassungsbereichen. So sind Eingriffsstöße des Zahngurtes auf das Rad abgefedert, minimiert und gemildert. Eingreifgeräusche von Nocken oder Zähnen des Zahngurtes werden gemindert, wodurch sich eine erhöhte Laufruhe ergibt. Teilungs- oder Fertigungstoleranzen bei Nocken oder Zähnen an oder auf dem Zahngurt werden durch das durch die Einschnitte ermöglichte elastische Spiel der diese Zähne erfassenden Erfassungsbereiche zueinander ausgeglichen. Die Erfassungsbereiche sind als Zahnausnehmungen an der Umfangsfläche zum Aufnehmen der Zähne des Zahngurtes ausgebildet oder weisen solche auf. Damit die durch die einzelnen Einschnitte gegebene Elastizität zwischen jeden dieser Zahnausnehmungen gewährleistet ist, ist vorgesehen, dass die Einschnitte jeweils zwischen zwei zueinander benachbarten Zahnausnehmungen vorgesehen sind. Es folgt am Umfang also immer auf jede Zahnausnehmung wenigstens ein Einschnitt.

Im Prinzip könnten die Einschnitte in beliebigen Richtungen verlaufen, auch schräge Einschnitte sind möglich. Um gleiche elastische Verhältnisse in jeder Laufrichtung zu ermöglichen, ist aber bevorzugt, dass sich die Einschnitte in radialer Richtung erstrecken. Durch mehr oder weniger große Einschnitte ist damit sozusagen eine Art Speichenrad geschaffen, dessen einzelne Speichen am radial äußeren Ende nicht miteinander verbundene Umfangsflächenelemente tragen, an welchen die Eingriffs- oder Erfassungsbereiche ausgebildet sind.

Damit trotz den Einschnitten eine möglichst große Umfangsfläche zum Führen des Laufes des Zahngurtes zur Verfügung steht, andererseits aber die durch die Einschnitte ermöglichte Elastizität möglichst hoch ist, ist gemäß einer vorteilhaften Ausgestaltung der Erfindung vorgesehen, daß die Einschnitte an ihren radial inneren Enden eine größere Ausdehnung in Umfangsrichtung aufweisen als an ihren offenen Enden. Durch die Auswahl der Breite der offenen Enden kann man auch die maximale Umfangsverschiebung oder - verbiegung der Erfassungsbereiche zueinander begrenzen, da diese bei entsprechender Verschiebung an den offenen Enden aneinanderstoßen. Die innen weite und außen enge Ausbildung der Einschnitte kann zum Beispiel dadurch realisiert sein, daß sich die Einschnitte von radial außen nach innen gesehen konisch erweitern. Außerdem ist, um einerseits eine möglichst große Durchbrechung der Materialsteifheit in dem Rad durch die Einschnitte zu gewährleisten, andererseits aber auch die Fertigung des Rades zu vereinfachen, bevorzugt, daß die Einschnitte an ihren radial inneren Enden in eine axiale Durchgangsbohrung oder -öffnung münden, deren Durchmesser größer ist als die größte Ausdehnung der Einschnitte in Umfangsrichtung.

Ein erfindungsgemäßer, ein solches erfindungsgemäßes Zahngurtführungsrad als Zahngurtantriebsrad verwendender Zahngurtantrieb zeichnet sich durch besondere Laufruhe aus und ist deswegen insbesondere als Garagentorantrieb geeignet.

Ausführungsbeispiele der Erfindung werden im folgenden anhand der beigefügten Zeichnung näher erläutert. Es zeigen:
- Fig. 1: einen Schnitt quer zur Axialrichtung durch ein Antriebsrad eines Zahngurtantriebes,
- Fig. 2: eine Schnittansicht durch das Antriebsrad nach Fig. 1 entlang der Linie I-I, und
- Fig. 3: eine schematische Querschnittsansicht, die die innere Gestaltung eines Führungsrades für einen Zahngurtantrieb in einer weiteren Ausführungsform verdeutlicht.

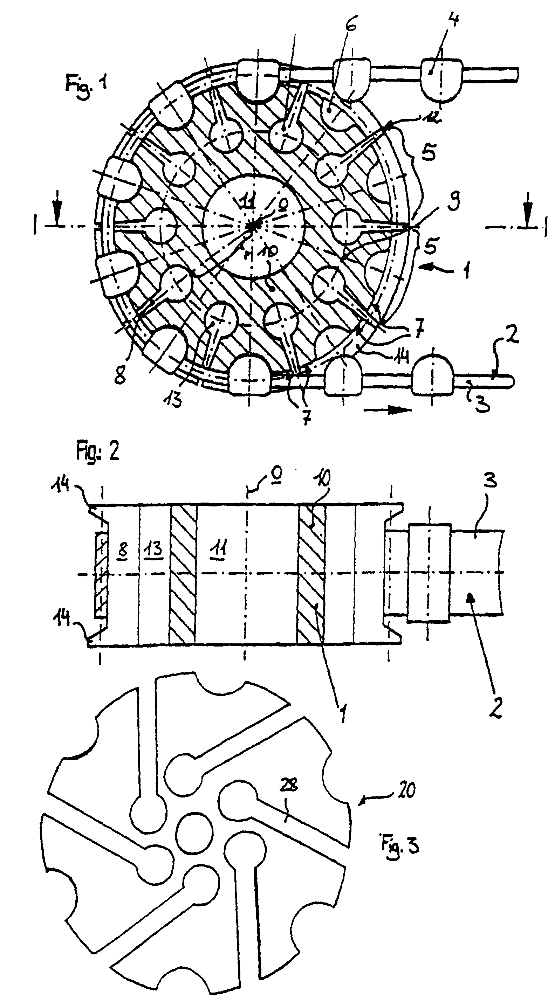

In den Fig. 1 und 2 ist ein Teil eines Garagentorantriebes mit einer ersten Ausführungsform eines Führungsrades für einen Zahngurtantrieb gezeigt. Es handelt sich dabei um ein Antriebsrad 1, das zum Antreiben eines Zahngurtes 2 dient. Der Torantrieb dient zum automatischen Öffnen und Schließen eines Garagentores. Die hierzu erforderliche Bewegungsübertragung erfolgt über ein Gurtschloß, das die Zahngurtenden miteinander so verbindet, daß der Zahngurt 2 ein Endloszugmittel bildet. Das Gurtschloß ist an einen mit dem Garagentor verbundenen Führungsschlitten angekoppelt. Zum Führen des Zahngurtes 2 ist an einem Ende einer Führungsschiene für den Führungsschlitten das Antriebsrad 1 und an dem entgegensetzten Ende eine Umlenkrolle oder ein Umlenkrad angeordnet. Von dem so aufgebauten Garagentorantrieb ist in den Fig. 1 und 2 nur das Antriebsrad 1 mit einem Teil des um das Antriebsrad 1 herumgeführten Zahngurtes 2 gezeigt.

Der Zahngurt 2 besteht im wesentlichen aus einem Gurt 3 aus Material mit in Zugrichtung großem Dehnungswider-stand. An den Gurt 3 sind in regelmäßigen Abständen Kunststoffnocken oder Zähne 4 durch Anspritzen oder dergleichen angebracht.

Das Antriebsrad 1 besitzt wie aus Fig. 2 ersichtlich eine Scheibenform und könnte daher auch als Antriebsscheibe bezeichnet werden. Das Antriebrad weist zum Erfassen der Zähne 4 am Umfang verteilt Erfassungsbereiche 5 auf. An der Umfangsfläche sind die Erfassungsbereiche 5 mit Zahnaufnahmen oder Zahnausnehmungen 6 versehen, deren Form der Form der Zähne 4 angepaßt ist. Die Zahnausnehmungen 6 sind an der Umfangsfläche so ausgebildet, daß die zwischen den einzelnen Zahnausnehmungen 6 verbleibenden Teile 7 der auf den Erfassungsbereichen 5 ausgebildeten Umfangsfläche zum Stützen des Gurtes 3 dienen. Im Bereich dieser Teile 7 erstrecken sich jeweils Einschnitte 8 in radialer Richtung zur Mittelachse des Antriebsrades 1. Diese Einschnitte 8 durchbrechen den Körper des Antriebsrades 1 jeweils radial von innen nach außen gesehen ab einem Radius r bis zum äußeren Umfang, so daß die Eingriffsbereiche 5 nur über zwischen den Einschnitte 8 verbleibende Stege 9 mit einem undurchbrochenen Nabenbereich 10, der mit einer Axialbohrung 11 zum Aufflanschen auf eine (nicht dargestellte) Antriebswelle versehen ist und sich von dieser Axialbohrung 11 mit dem Radius r erstreckt, verbunden sind. Die einzelnen Erfassungsbereiche 5 sind untereinander nur über diesen Nabenbereich 10 verbunden.

An seinem offenen, die Umfangsfläche des Antriebsrades 1 durchbrechenden Ende 12 ist jeder Einschnitt 8 eng, um sich zur Mittelachse O des Antriebsrades 1 hin konisch zu erweitern. Am radial inneren Ende mündet jeder Einschnitt 8 in eine axiale Durchgangsbohrung 13.

Wie Fig. 2 zeigt, weist das Antriebsrad 1 an seinem äußeren Umfang Führungsränder 14 zum Führen des Gurtlaufes auf. Auch die Führungsränder 14 werden durch die Einschnitte 8 durchbrochen. Durch den konischen Verlauf der Einschnitte 8 ist die Durchbrechung aber in Umfangsrichtung weniger ausgedehnt als im radia] eiter innenliegenden Teil des Antriebsrades 1.

Wie Fig. 3, die den inneren Aufbau eines weiteren Führungsrades 20 zeigt, verdeutlicht, müssen die Einschnitte 8 nicht in jedem Fall in radialer Richtung verlaufen, auch schräge Einschnitte 28 sind denkbar. Die Form der Einschnitte 28 verdeutlicht auch, daß die Einschnitte außerdem nicht konisch zur Mittelachse verlaufen müssen.

Als Materialien für das Antriebsrad 1 kommen im Prinzip sämtliche für Antriebsräder von bekannten Antrieben verwendbaren Materialien in Betracht, soweit sie eine genügende Festigkeit zum genügend bruchsicheren Ausbilden der Stege 9 aufweisen. Außerdem sollte gewährleistet sein, daß benachbarte Eingriffs- oder Erfassungsbereiche 5 in gewissem Maße elastisch zueinander oder voneinander weg gebogen werden können.

Anderseits müssen die Einschnitte 8 nicht unbedingt vollkommen materialfrei bleiben. Es ist ohne weiteres denkbar, die Einschnitte 8 mit einem eine gewisse Elastizität bietenden Material wie zum Beispiel Gummi oder gewisse elastische Kunststoffe teilweise zu überbrücken oder ganz auszufüllen.

Die wesentlichen Aspekte des hier beschriebenen Führungsrades für ein Zahgurtgetriebe oder einen Zahngurtantrieb werden im folgenden anhand von Fig. 1 noch einmal zusammengefaßt:

### BEZUGSZEICHENLISTE

- 1: Antriebsrad
- 2: Zahngurt
- 3: Gurt
- 4: Zähne
- 5: Erfassungsbereich
- 6: Zahnausnehmung
- 7: Teil der Umfangsfläche
- 8: Einschnitt
- 9: Steg
- 10: Nabenbereich
- 11: Axialbohrung
- 12: offenes Ende
- 13: axiale Durchgangsbohrung
- 20: Führungsrad
- 28: Einschnitt
- r: Radius des Nabenbereichs
- O: Mittelachse

## Patentansprüche

1. Gurtgetriebe oder Gurtantrieb, umfassend einen Gurt (2) und ein Führungs- oder An- bzw. Abtriebsrad (1, 20) mit über dem Radumfang verteilten Erfassungsbereichen (5) zum Erfassen des Gurtes (2) und mit Durchbrechungen oder Einschnitten (8, 28) am äußeren Umfangsbereich zum Ermöglichen einer elastischen Relativbewegung in Umfangsrichtung zwischen Erfassungsbereichen (5) oder Teilbereichen derselben,
**dadurch gekennzeichnet,**
**dass** das Gurtgetriebe oder der Gurtantrieb als Zahngurtgetriebe bzw. Zahngurtantrieb mit einem Zahngurt (2) ausgebildet ist, wobei die Erfassungsbereiche (5) des Führungs- oder An- bzw. Abtriebsrads (1, 20) zum formschlüssigen Erfassen von Zähnen (4) des Zahngurtes (2) ausgebildet sind, dass die Erfassungsbereiche (5) Zahnausnehmungen (6) an der Umfangsfläche zum Aufnehmen der Zähne (4) des Zahngurtes (2) umfassen und dass die Einschnitte (8, 28) jeweils zwischen zwei zueinander benachbarten Zahnausnehmungen (6) vorgesehen sind.

2. Gurtgetriebe oder Gurtantrieb nach Anspruch 1
**dadurch gekennzeichnet,**
**dass** sich die Einschnitte (8) des Führungs- oder An- bzw. Abtriebsrads (1, 20) in radialer Richtung erstrecken.

3. Gurtgetriebe oder Gurtantrieb nach einem der Ansprüche 1 oder 2,
**dadurch gekennzeichnet,**
**dass** die Einschnitte (8) des Führungs- oder An- bzw. Abtriebsrads (1, 20) an ihren radial inneren Enden eine größere Ausdehnung in Umfangsrichtung aufweisen als an ihren offenen Enden (12).

4. Gurtgetriebe oder Gurtantrieb nach Anspruch 3,
**dadurch gekennzeichnet,**
**dass** sich die Einschnitte (8) von radial außen nach innen gesehen konisch erweitern.

5. Gurtgetriebe oder Gurtantrieb nach einem der Ansprüche 1 bis 4,
**dadurch gekennzeichnet,**
**dass** die Einschnitte (8, 28) des Führungs- oder An- bzw. Abtriebsrads (1, 20) an ihren radial inneren Enden in eine axiale Durchgangsbohrung (13) oder - Öffnung münden, deren Durchmesser größer ist als die größte Ausdehnung der Einschnitte in Umfangsrichtung.

6. Gurtantrieb nach einem der Ansprüche 1 bis 5,
**dadurch gekennzeichnet,**
**dass** er als Garagentorantrieb ausgebildet ist.

## Claims

1. A belt transmission or belt drive, comprising a belt (2) and a guide or drive / takeoff pulley (1, 20) with gripping areas (5) disposed about the pulley circumference for gripping the belt (2) and with openings or indentations (8, 28) on the outer circumferential area to allow an elastic relative movement in the circumferential direction between gripping areas (5) or partial areas thereof,
**characterised in that** the belt transmission or belt drive is configured as a toothed belt transmission or toothed belt drive with a toothed belt (2),
wherein the gripping areas (5) of the guide or drive / takeoff pulley (1, 20) are configured to form-lockingly grip tooth recesses (6) on the circumferential surface to pick up the teeth (4) of the toothed belt (2) and that the indentations (8, 28) are provided in each case between two adjacent tooth recesses (6).

2. A belt transmission or belt drive according to claim 1, **characterised in that** the indentations (8) of the guide or drive / takeoff pulley (1, 20) extend in the radial direction.

3. A belt transmission or belt drive according to one of claims 1 or 2, **characterised in that** the indentations (8) of the guide or drive / takeoff pulley (1, 20) have a greater expansion at their radial inner ends than at their open ends (12) in the circumferential direction.

4. A belt transmission or belt drive according to claim 3, **characterised in that** the indentations (8) expand conically from outside to inside, seen from a radial perspective.

5. A belt transmission or belt drive according to one of claims 1 to 4, **characterised in that** the indentations (8, 28) of the guide or drive / takeoff pulley (1, 20) open at their radial inner end into an axial bore (13) or opening, the diameter of which is greater than the greatest expansion of the indentations in the circumferential direction.

6. A belt drive according to one of claims 1 to 5, **characterised in that** it is configured as a garage door drive.

## Revendications

1. Transmission ou entraînement à courroie comprenant une courroie (2) et une roue entraînée ou motrice (1, 20), avec des zones de prise (5) réparties à la périphérie de la roue pour prendre la courroie (2) et des interruptions ou des encoches (8, 28) dans la zone périphérique extérieure pour permettre un mouvement relatif élastique dans la direction périphérique entre les zones de prise (5) et les zones partielles de celles-ci,
**caractérisée en ce que**
la transmission ou l'entraînement à courroie est réalisée sous la forme d'une transmission ou d'un entraînement à courroie dentée comprenant une courroie dentée (2), les zones de prise (5) de la roue de guidage ou de la roue motrice entraînée (1, 20), sont réalisées pour prendre les dents (4) de la courroie dentée (2) par une liaison de forme,
les zones de prise (5) comportant des cavités à dents (6) dans la surface périphérique pour recevoir les dents (4) de la courroie dentée (2) et,
les encoches (8, 28) sont prévues chaque fois entre deux cavités de dents voisines (6).

2. Transmission ou entraînement à courroie selon la revendication 1,
**caractérisée en ce que**
les encoches (8) de la roue de guidage ou de la roue motrice ou/et entraînée (1, 20) s'étendent dans la direction radiale.

3. Transmission ou entraînement à courroie selon l'une des revendications 1 ou 2,
**caractérisée en ce qu'**
au niveau de leur extrémité radiale intérieure, les encoches (8) de la roue de guidage ou de la roue motrice et/ou entraînée (1, 20) ont une extension plus grande dans la direction périphérique qu'au niveau de leur extrémité ouverte (12).

4. Transmission ou entraînement selon la revendication 3,
**caractérisée en ce que**
les encoches (8) s'élargissent selon une forme conique, de l'extérieur vers l'intérieur dans la direction radiale.

5. Transmission ou entraînement selon l'une quelconque des revendications 1 à 4,
**caractérisée en ce que**
les encoches (8, 28) de la roue de guidage ou de la roue motrice ou entraînée (1, 20) débouchent par leurs extrémités radiales intérieures dans un perçage ou une ouverture traversant axialement (13) dont le diamètre est plus grand que la plus grande extension des encoches dans la direction périphérique.

6. Transmission ou entraînement selon l'une quelconque des revendications 1 à 5,
**caractérisée en ce qu'**
elle est appliquée à un entraînement de porte de garage.
